# FASCICULE DE BREVET EUROPEEN

(11) **EP 1 075 405 B1**
(45) Date de publication et mention de la délivrance du brevet: **31.03.2004**
(21) Numéro de dépôt: 00907732.2
(22) Date de dépôt: 25.02.2000
(51) Int. Cl.: B60T 11/236, F16D 25/12

(54) **DISPOSITIF DE COMMANDE HYDRAULIQUE D'UN EMBRAYAGE DE VEHICULE AUTOMOBILE**
HYDRAULISCHER HAUPTZYLINDER EINER FAHRZEUGKUPPLUNG
HYDRAULIC CONTROL DEVICE FOR MOTOR VEHICLE CLUTCH

(30) Priorité: 26.02.1999 FR 9902427
(43) Date de publication de la demande: 14.02.2001
(73) Titulaire: VALEO EMBRAYAGES s.a.s., 80009 Amiens Cedex 1 (FR)
(72) Inventeur: ANGIONE, Pasquale, F-75019 Paris (FR); REY, Frédéric, F-75011 Paris (FR)
(74) Mandataire: Lemaire, Marc
(86) Numéro de dépôt international: PCT/FR2000/000481
(87) Numéro de publication internationale: WO 2000/050281

(56) Documents cités:
- FR-A- 2 741 919
- GB-A- 2 216 629

## Description

L'invention concerne un cylindre émetteur, ou récepteur, d'un dispositif de commande hydraulique de freinage ou d'un embrayage de véhicule automobile, du type comportant un élément intermédiaire.

L'invention concerne plus particulièrement un dispositif de commande hydraulique du type comportant au moins un cylindre de commande, dans lequel le cylindre comporte un corps de cylindre sensiblement tubulaire dans un alésage interne duquel coulisse axialement un piston qui délimite, par une face avant, une chambre hydraulique, dans lequel un orifice de raccordement d'une canalisation débouche dans la chambre hydraulique, dans lequel le corps de cylindre est étagé et comporte une partie avant, qui délimite la chambre hydraulique et dans laquelle est formée au moins une portion avant de l'alésage interne dans lequel coulisse le piston, et une partie arrière de diamètre élargi, les deux parties étant délimitées par une paroi transversale annulaire du corps de cylindre contre laquelle prend appui axialement un élément intermédiaire, reçu dans la partie arrière, de positionnement axial d'au moins un joint intérieur d'étanchéité qui coopère avance la paroi latérale du piston, et dans lequel ledit élément intermédiaire est maintenu axialement dans la partie arrière par une chemise arrière annulaire cylindrique montée dans la partie arrière et fixée de manière étanche dans cette dernière par collage ou par soudage, notamment par soudage par ultrasons.

On connaît du document FR-A-2.741.919 un dispositif de commande de ce type dans lequel l'étanchéité entre le piston et le corps de cylindre, pour éviter toute fuite de fluide sous pression hors de la chambre hydraulique, est réalisée par un joint intérieur avant composite qui est positionné axialement par un élément intermédiaire en forme rondelle en étant reçu dans un logement intérieur de joint formé dans la paroi interne du corps de cylindre, l'étanchéité étant complétée par un joint intérieur arrière d'un type à lèvre qui est reçu dans un logement intérieur de joint formé dans la paroi interne de la chemise.

Une telle conception nécessite de réaliser des logements de joints dans différents composants. L'assemblage et le montage des composants et des joints n'est pas aisé et présente des risques d'endommager les joints.

Enfin, lors d'une l'opération de soudage par ultrasons, les joints risquent aussi d'être endommagés. Il convient donc de trouver une solution qui convient à ce mode de soudage ainsi qu'a d'autres modes possibles de soudage ou à un collage.

L'invention a donc pour but de proposer un moyen de réalisation de l'étanchéité de la chambre hydraulique qui soit simple, fiable, facile à assembler, qui ne s'oppose pas au coulissement du piston par des frottement trop importants et qui offre une possibilité de conception modulaire du dispositif afin de standardiser certains composants quel que soit le nombre de joints intérieurs d'étanchéité et le type d'étanchéité.

Dans ce but, l'invention propose un dispositif du type décrit précédemment, caractérisé en-ce que l'élément intermédiaire est un élément tubulaire formant porte-joint(s) dans la paroi périphérique interne duquel est formé au moins un logement intérieur de joint qui est ouvert radialement vers l'intérieur en direction de la paroi latérale du piston.

Grâce à l'invention le joint n'est pas sensible aux vibrations lors du soudage par ultrasons de la chemise avec le corps et ne risque pas d'être détérioré. En outre, il est possible de former un sous ensemble joint - élément tubulaire que l'on enfile dans le corps de cylindre et que l'on bloque ensuite par montage de la chemise arrière dans le corps de cylindre L'élément intermédiaire permet une standardisation plus poussée du cylindre de commande du fait qu'il forme un sous-ensemble avec au moins un joint d'étanchéité .Cet élément peut constitué ainsi une pièce d'adaptation notamment en fonction de la constitution du ou des joints , sa taille notamment sa longueur axiale dépendant des applications. En variante cette pièce est standardisée. Grâce à cet élément intermédiaire on peut assembler la chemise avec le corps par collage ou tous les types de soudage compatible avec la constitution en matière plastique du corps et de la chemise.

Selon d'autres caractéristiques de l'invention :
- le logement intérieur de joint est ouvert axialement vers l'avant, et le joint qu'il reçoit est retenu axialement vers l'avant par ladite paroi transversale annulaire du corps de cylindre contre laquelle prend appui axialement l'élément intermédiaire porte-joint(s),en sorte que le corps est simplifié ;
- le logement intérieur de joint est ouvert axialement vers l'arrière, et le joint qu'il reçoit est retenu axialement vers l'arrière par une face transversale annulaire d'extrémité avant de la chemise ,qui s'en trouve ainsi simplifiée ;
- l'élément intermédiaire porte-joints porte deux joints intérieurs dynamiques d'étanchéité avant et arrière qui sont reçus dans des logements intérieurs avant et arrière ouverts axialement vers l'avant et vers l'arrière respectivement ;
- le joint intérieur d'étanchéité reçu dans ledit logement intérieur ouvert axialement vers l'avant est un joint composite qui comporte une bague interne en matériau à faible coefficient de frottement qui est serrée radialement contre la paroi latérale du piston par un anneau externe en matériau élastomère reçu dans ledit logement intérieur ;
- le joint intérieur d'étanchéité reçu dans ledit logement intérieur ouvert axialement vers l'arrière est une coupelle d'étanchéité à lèvre à frottement radial ;
- le dispositif comporte un joint extérieur d'étanchéité qui intervient entre la périphérie externe de l'élément intermédiaire porte-joint(s) et la périphérie interne de la partie arrière du corps de cylindre pour protéger la zone d'assemblage entre le corps et la chemise.
- le joint extérieur est reçu dans un logement extérieur de joint formé dans l'élément intermédiaire porte-joint(s) et qui débouche radialement vers l'extérieur en direction de la périphérie interne de la partie arrière du corps de cylindre ;
- ledit logement extérieur de joint est ouvert axialement vers l'avant, et le joint extérieur qu'il reçoit est retenu axialement vers l'avant par ladite paroi transversale annulaire du corps de cylindre contre laquelle prend appui axialement l'élément intermédiaire porte-joint(s) ;
- l'élément intermédiaire porte-joint(s) est maintenu serré axialement entre ladite paroi transversale annulaire du corps de cylindre et la face transversale annulaire d'extrémité avant de la chemise ;
- le corps de cylindre et la chemise sont réalisés en matériau plastique ;
- l'élément intermédiaire porte-joint(s) est réalisé en matériau plastique ;
- le tronçon d'extrémité libre arrière de la chemise fait saillie axialement au-delà de l'extrémité axiale arrière du corps de cylindre et porte des moyens de butée pour limiter la course axiale vers l'arrière du piston par rapport au corps de cylindre ;
- lesdits moyens de butée sont constitués par un capuchon comportant une jupe axiale cylindrique qui entoure le tronçon d'extrémité axiale arrière de la chemise par rapport auquel elle est retenue axialement, et comportant un fond transversal, percé pour le passage de la tige de piston, qui constitue une butée transversale annulaire avec laquelle est susceptible de coopérer l'extrémité axiale arrière du piston ;
- la jupe axiale du capuchon de butée est emboîtée élastiquement sur le tronçon d'extrémité axiale arrière de la chemise ;
- le fond transversal de butée du capuchon est décalé axialement vers l'arrière par rapport à la face annulaire transversale d'extrémité axiale arrière de la chemise ;
- le dispositif comporte un soufflet de protection et d'étanchéité monté sur le corps de cylindre et sur la tige de piston ;
- le soufflet comporte une jupe cylindrique axiale avant, pour sa fixation sur le tronçon d'extrémité axiale arrière de la chemise, qui entoure la jupe du capot de protection ;
- le piston s'étend à travers l'élément intermédiaire porte-joint(s) avec jeu radial ;
- la zone de soudage étanche entre la chemise et la partie arrière du corps de cylindre est décalée axialement vers l'arrière par rapport à l'élément intermédiaire porte-joint(s) ;
- la chemise est une chemise de guidage en coulissement du piston, et, à cet effet, sa paroi cylindrique interne constitue une portion arrière de l'alésage interne du cylindre dans lequel le piston est monté coulissant de manière étanche.

D'autres caractéristiques et avantages de l'invention apparaîtront à la lecture de la description détaillée qui suit pour la compréhension de laquelle on se reportera aux dessins annexés dans lesquels :
- les figures 1 et 2 sont des vues en coupe axiale d'un cylindre récepteur conforme aux enseignements de l'invention, dans lequel le piston est représenté respectivement dans une première position reculée et dans une seconde position avancée ; et

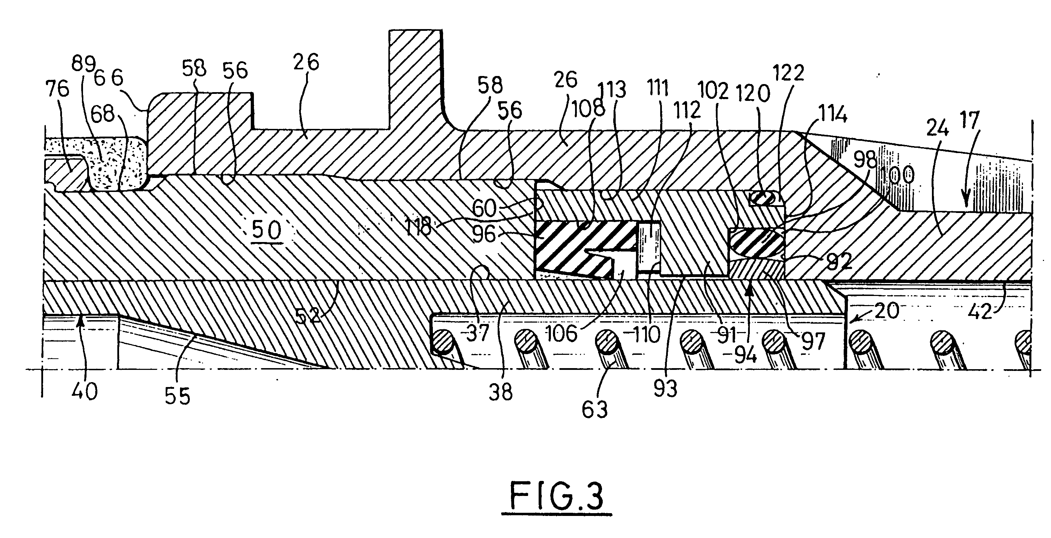

- la figure 3 représente une vue agrandie d'un détail de la figure 2.

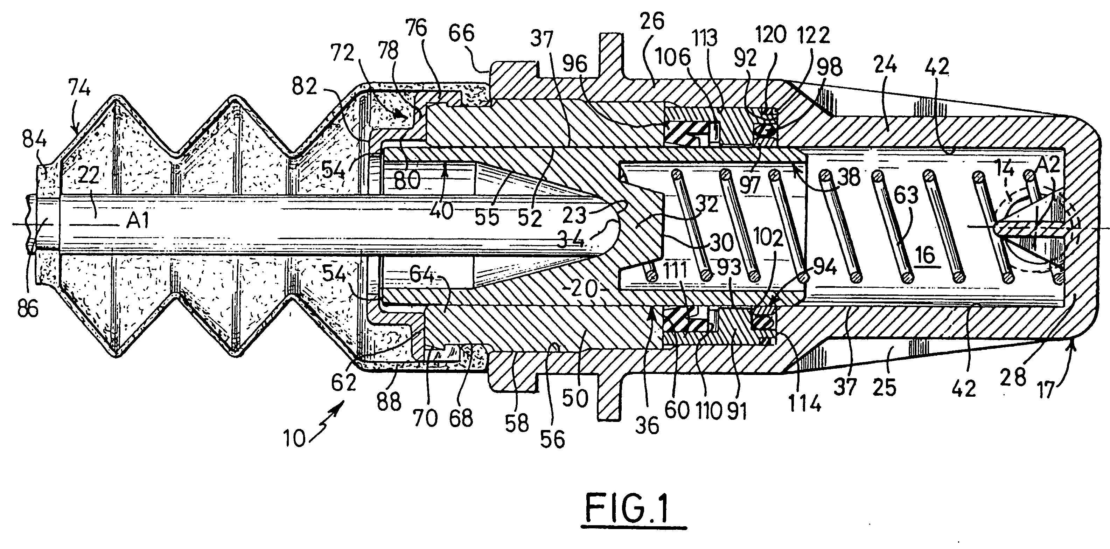

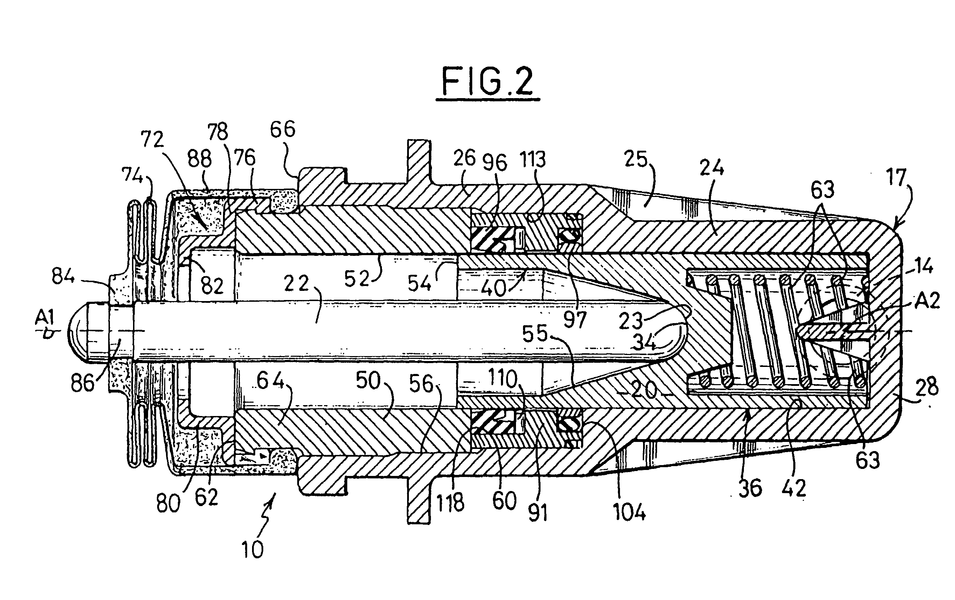

On a représenté sur les figures 1 et 2 un cylindre récepteur 10 d'un dispositif de commande hydraulique d'un embrayage de véhicule automobile.

Un tel dispositif (non représenté) comporte essentiellement un cylindre émetteur, de structure similaire au cylindre récepteur ici représenté, et dont un piston se déplace sous l'action d'une tige de commande reliée par exemple à une pédale d'embrayage sur laquelle agit le conducteur. Le piston du cylindre émetteur est destiné à expulser un fluide contenu dans une chambre hydraulique en direction d'une canalisation qui relie le cylindre émetteur au cylindre récepteur 10.

La canalisation débouche par un orifice d'entrée à l'intérieur d'un raccord 14 débouchant lui-même dans une chambre hydraulique 16 délimitée dans un corps de cylindre 17 en matière synthétique moulable, ici en matière plastique, du cylindre récepteur 10 pour provoquer le déplacement d'un piston 20 qui, par l'intermédiaire d'une tige de commande 22, agit par exemple sur une fourchette de commande d'un embrayage (non représentée) pour provoquer le débrayage.

En variante le piston agit en traction sur cette fourchette par l'intermédiaire d'un câble.

Le corps de cylindre 17 présente une forme générale de tube étagé d'axe A1 et qui comporte une partie avant 24 de diamètre réduit par rapport à une partie arrière 26 de plus grand diamètre.

Afin de rigidifier le corps de cylindre 17, il est prévu, tout autour de la partie avant 24 du corps 17, des nervures de rigidification 25.

La chambre hydraulique 16 est délimitée dans la partie avant 24 du corps de cylindre 17 et elle est délimitée axialement, à l'avant, par une paroi transversale avant 28 et, à l'arrière, par une face transversale avant 30 du piston 20.

On peut prévoir de munir la chambre hydraulique 16 de rainures axiales (non représentées) qui sont par exemple réalisées venues de matière par moulage avec le corps 17 et qui sont agencées angulairement en correspondance avec les nervures de rigidification 25. Les rainures permettent notamment de garantir une meilleure répartition de la pression de contact entre le piston 20 et le corps de cylindre 17 et permettent également d'éviter qu'il n'y ait des surépaisseurs de matière dans le corps de cylindre 17 au niveau des nervures 25, ce qui est particulièrement intéressant dans le cas d'une pièce réalisée par moulage.

Par ailleurs, le raccord 14 débouche radialement, selon un axe A2, dans la chambre hydraulique 16, ce qui permet de diminuer l'encombrement axial du cylindre récepteur 10.

Le volume de la chambre hydraulique 16 est susceptible de varier en fonction de la position axiale du piston 20 dans le corps de cylindre 17, le piston 20 étant susceptible de coulisser axialement entre une première position avancée représentée sur la figure 1 et une deuxième position reculée représentée sur la figure 2.

Le piston 20 qui est représenté dans ces figures est réalisé par moulage en matière plastique, mais une réalisation par emboutissage d'une tôle métallique, par exemple en acier ou en alliage d'aluminium est aussi envisageable.

Le piston 20 est essentiellement formé d'une paroi transversale 32, dont la face avant 30 délimite la chambre hydraulique 16 et dont une face arrière 34 coopère avec la tige de commande 22, et d'une jupe latérale cylindrique 36 qui assure le guidage du piston 20 dans le corps de cylindre 17.

Plus précisément, la paroi transversale 32 comporte une portion centrale hémisphérique 34, de même rayon de courbure que l'extrémité 23 de la tige de commande 22, qui est reliée à l'extrémité axiale arrière 54 de la jupe 36 par une portion conique 55 qui autorise un léger débattement angulaire de la tige de commande 22 autour de son extrémité avant 23.

Dans un dispositif de commande hydraulique d'un embrayage, la pression du fluide est susceptible d'atteindre des valeurs de l'ordre de 30 à 40 bars et il est donc nécessaire d'assurer d'une part un excellent guidage du piston 20 dans le corps de cylindre 17, pour éviter tout risque d'arc-boutement et de coincement, et d'autre part d'assurer une étanchéité de très bonne qualité susceptible de résister à de telles pressions.

Dans le but d'améliorer le guidage du piston 20, la jupe annulaire 36 s'étend axialement sur une longueur dont la valeur est comprise entre trois et quatre fois la valeur de son diamètre et comporte ainsi, de part et d'autre de la paroi transversale 32 du piston 20, un tronçon tubulaire avant 38 et un tronçon tubulaire arrière 40.

Le tronçon tubulaire avant 38 de la jupe 36 est destiné à coopérer plus particulièrement avec une surface cylindrique interne 42 de la partie avant 24 du corps de cylindre 17 qui délimite la chambre hydraulique 16 qui constitue la portion avant de l'alésage interne du corps 17 dans lequel le piston est monté coulissant.

Le tronçon arrière 40 de la jupe 36 du piston 20 coulisse axialement dans la partie arrière 26 du corps de cylindre 17.

Plus précisément, le tronçon arrière 40 coopère avec une chemise arrière de guidage 50 qui est rapportée axialement dans la partie arrière 26 de grand diamètre du corps 17 et dont une surface cylindrique interne 52 est de diamètre sensiblement égal au diamètre de la surface cylindrique interne 42 de la partie avant 24 du corps 17 et coaxiale à celle-ci pour constituer la portion arrière de l'alésage interne du cylindre.

Le tronçon avant 38 de la jupe annulaire 36 du piston 20 délimite un logement cylindrique qui permet le guidage d'un ressort de compression 63 qui est interposé, dans la chambre hydraulique 16, entre la paroi transversale avant 28 du corps principal 18 et la face avant transversale 30 du piston 20, dans le but de forcer le piston 20 au contact de la tige de commande 22.

De manière similaire, le tronçon arrière tubulaire 40 de la jupe annulaire 36 délimite un logement cylindrique dans lequel est reçue l'extrémité axiale avant de la tige de commande 22.

La chemise arrière 50 est montée emmanchée axialement, d'arrière en avant, dans la partie arrière 26 du corps de cylindre 17 qui comporte à cet effet un alésage interne 56 de diamètre supérieur à la portion avant d'alésage interne 42, conférant ainsi au corps de cylindre 17 une forme générale tubulaire étagée.

La chemise arrière 50 est une pièce en matière plastique, de forme générale tubulaire coaxiale au corps de cylindre 17, d'axe A1 , et elle est délimitée par sa portion d'alésage interne 52, par sa face externe 58 cylindrique et par deux faces transversales annulaires d'extrémité avant 60 et arrière 62.

La longueur de la chemise arrière 50 est telle que, en position montée dans l'alésage 56, son tronçon d'extrémité longitudinale arrière 64 fait saillie axialement vers l'arrière au delà de la face transversale annulaire d'extrémité arrière 66 de la partie arrière 26 du corps de cylindre 17.

La périphérie externe du tronçon d'extrémité arrière 64 comporte une gorge radiale interne 68 et un chanfrein de montage 70.

La gorge 68 permet le montage d'une part d'un capuchon 72 de butée pour le piston 20 et, d'autre part, le montage de la partie d'extrémité avant d'un soufflet 74 de protection et d'étanchéité.

Le capuchon de butée 72 est une pièce moulée en matière plastique rigide ou semi-rigide qui comporte une jupe axiale cylindrique 76 d'extrémité avant qui est fendue axialement vers l'avant pour constituer des doigts de fixation et d'accrochage par emboîtement élastique du capuchon de butée 72 sur le tronçon d'extrémité arrière 64 de la chemise arrière 50.

Le positionnement axial du capuchon 72 est assuré par une paroi transversale 78 du capuchon qui prolonge la jupe axiale avant 76 et qui est en butée contre la face transversale annulaire d'extrémité axiale 62 qui se prolonge elle-même par une jupe annulaire arrière 80 qui, comme on peut le voir à la figure 1, entoure la portion tubulaire arrière 40 du piston 20 lorsque ce dernier est en position reculée. La butée axiale arrière du piston 20 est assurée par un fond transversal arrière percé 82 du capuchon de butée 72.

Le fond transversal percé 82 prolonge radialement vers l'intérieur la jupe axiale arrière 80 et il sert de butée, par sa face avant, à la face transversale annulaire d'extrémité arrière 54 du piston 20.

Le soufflet d'étanchéité 74 est de conception générale connue et il est réalisé en accordéon dans un matériau élastomère.

Son extrémité arrière 84 en forme de bourrelet est reçue dans une gorge 86 de la tige 22 tandis que son extrémité avant est conformée en une jupe d'orientation axiale 88 qui entoure radialement à l'extérieur la jupe 76 du capuchon de butée 72 et qui se termine par un bourrelet radial intérieur 89 reçu dans la partie axiale avant de la gorge 68 dans laquelle elle est maintenu axialement par les doigts 76 de fixation du capuchon de butée 72.

Conformément à une caractéristique de l'invention, la chemise arrière 50 est fixée de manière étanche dans le corps de cylindre 17 par une opération de soudage du type avec apport indirect de chaleur, notamment par soudage par ultrasons ou par l'intermédiaire d'au moins une source d'énergie du type laser émettant de préférence un rayonnement en forme de faisceau dans le domaine de l'infrarouge. Dans ce cas l'un des éléments corps 17-chemise 50 est en matériau transparent au rayonnement infrarouge et l'autre non transparent au rayonnement infrarouge selon la position du laser par rapport au corps 17.Par exemple lorsque le laser est placé à l'extérieur du corps 17 celui-ci est en matériau transparent au rayonnement infrarouge émis par le laser ,tandis que la chemise 50 est non transparente à ce rayonnement. Par exemple la chemise 50 est en matériau identique à celui du corps 17 et présente en son sein des additifs, tels que du charbon d'une teneur de 1% à 2% pour absorber le rayonnement infrarouge. En variante les pièces 17,50 sont en matériau différent. Un mouvement relatif est réalisé entre le laser et le corps lors du soudage.

Cette opération de soudage est réalisée dans la zone d'interface 56-58 entre la périphérie externe de la chemise 50 et la périphérie interne de l'alésage qui la reçoit de préférence à serrage axial pour parfaire le soudage dans le cas d'un soudage du type laser. En variante le soudage est remplacé par une opération de collage.

Afin d'assurer l'étanchéité de l'ensemble du cylindre 10, et conformément aux enseignements de l'invention, il est prévu un élément intermédiaire 91 formant porte-joints, aussi appelé boîte à joints, qui est monté serré axialement entre la face transversale annulaire d'extrémité avant 60 de la chemise arrière 50 et la paroi transversale 92 qui délimite entre elles la portion avant de petit diamètre 42 et la portion arrière de grand diamètre 56 de l'alésage interne étagé du corps de cylindre 17.

La boîte à joints 91 est une pièce moulée en matière plastique qui, dans l'exemple illustré sur les figures, porte deux joints intérieurs d'étanchéité avant 94 et arrière 96 de conception générale connue.

La partie centrale massive de la boîte à joints 91 comporte un trou central cylindrique 93 qui est traversé par le piston 20, 36 avec un jeu radial entre la périphérie externe 37 du piston 20 et la paroi cylindrique interne du trou central 93.

A titre d'exemple, le joint d'étanchéité avant 94 est un joint dynamique d'étanchéité qui coopère avec la surface cylindrique externe 37 de la jupe 36 du piston 20 et, dans l'exemple illustré sur les figures, c'est un joint composite dont la structure est décrite et représentée en détail dans le document FR-A-2.741.919.

Le joint composite 94 est constitué d'une bague interne 97 à faible coefficient de friction qui est serré radialement vers l'intérieur par un anneau externe 98 en matériau élastomère qui, avec la bague interne 96, est reçue dans un premier logement intérieur 100 formé à l'extrémité axiale avant de la boîte à joints 91 qui est ouvert axialement vers l'avant, qui est délimité axialement vers l'arrière par une paroi transversale arrière 102 et qui est délimité radialement vers l'extérieur par une paroi cylindrique annulaire 104 contre laquelle prend appui élastiquement l'anneau 98.

Le joint composite 94 est ainsi retenu axialement dans son logement intérieur de joint 100 entre les faces transversales en vis-à-vis 102 et 92.

De conception connue, le second joint dynamique d'étanchéité 96 porté à l'arrière par la boîte à joints 91 est un joint en forme de coupelle d'étanchéité à lèvre qui est monté dans un logement intérieur de joint 106 qui, comme le premier logement 100, est ouvert radialement vers l'intérieur en direction de la surface cylindrique externe 37 du piston 20 et qui est ouvert axialement vers l'arrière en regard de la face transversale annulaire d'extrémité avant 60 de la chemise arrière 50.

Le logement intérieur de joint arrière 106 est délimité radialement vers l'extérieur par une paroi cylindrique annulaire 108 et axialement vers l'avant par une paroi transversale avant 110 qui comporte une série de nervures en relief 112 réparties angulairement de manière régulière pour assurer un bon fonctionnement du joint à lèvre 96.

Les deux logements intérieurs de joint 100 et 106 sont séparés axialement l'un de l'autre par la partie centrale massive de la boîte à joints 91 qui comporte aussi une jupe cylindrique tubulaire extérieure 111 qui est reçue axialement dans une portion complémentaire avant 113, de diamètre légèrement réduit, de l'alésage interne arrière 56 du corps de cylindre 57.

La position axiale de montage de la boîte à joints 91 est déterminée par la venue en butée de sa face transversale d'extrémité avant 114 contre l'épaulement radial 92, tandis que la chemise arrière 50 positionne axialement la boîte à joints 91 par coopération de sa face transversale annulaire d'extrémité avant 60 contre la face transversale d'extrémité arrière en vis-à-vis et annulaire 118 de la jupe 111 de la boîte à joints 91.

Conformément à une autre caractéristique de l'invention, la boîte à joints 91 porte aussi un joint extérieur d'étanchéité statique 120 qui est un joint agencé radialement à l'extérieur dans un logement extérieur de joint 122 formé dans la paroi périphérique externe de la jupe 111 de la boîte à joints 91 et qui débouche axialement vers l'avant.

En vue de l'assemblage, l'ensemble des joints intérieurs 94, 96 et extérieurs 120 est mis en place sur la boîte à joints 91 qui est introduite axialement dans le corps cylindrique 17 du cylindre 10 jusqu'à venir en butée contre l'épaulement radial 92.

On introduit ensuite la chemise arrière 50 et l'on réalise l'opération de fixation par soudage étanche de la chemise 50.

On peut ensuite introduire axialement le piston 20 avec son ressort de rappel 63 et ceci sans endommager les joints intérieurs qui sont maintenus en place dans leurs logements respectifs de la boîte à joints 91, en évitant ainsi tout phénomène de cisaillement des joints.

La fin du montage de l'assemblage s'effectue en venant mettre en place la tige 22 ainsi que le capuchon de butée 72 et le soufflet d'étanchéité 74.

Outre les facilités de montage des joints, la conception selon l'invention faisant appel à un élément intermédiaire 91 formant boîte à joints permet aussi d'éviter que les joints ne soient endommagés, ainsi que d'autres composants, lors de l'opération de soudage par ultrasons qui est effectuée dans une zone décalée axialement vers l'arrière et massive éloignée des autres composants sensibles. Cet élément intermédiaire forme un sous ensemble avec les joints et peut être standardisé dans tous les cas. Cet élément intermédiaire permet un assemblage par collage ou soudage du corps 17 avec la chemise.

Le piston peut avoir une autre forme. Il peut être en matière plastique ou être métallique comme dans le document FR-A-2 741 920. Il peut être en matière plastique et être entouré par une chemise métallique comme décrit dans le document FR 98 07213 déposé le 09 Juin 1998.

## Revendications

1. Dispositif de commande hydraulique de freinage ou d'un embrayage de véhicule automobile, comportant au moins un cylindre (10) de commande, dans lequel le cylindre (10) comporte un corps de cylindre (17) sensiblement tubulaire dans un alésage interne (42, 52) duquel coulisse axialement un piston (20) qui délimite, par une face avant (30), une chambre hydraulique (16), dans lequel un orifice (14) de raccordement d'une canalisation débouche dans la chambre hydraulique (16), dans lequel le corps de cylindre (17) est étagé et comporte une partie avant (24), qui délimite la chambre hydraulique (16) et dans laquelle est formée au moins une portion avant (42) de l'alésage interne dans lequel coulisse le piston (20), et une partie arrière de diamètre élargi (26), les deux parties (24, 26) étant délimitées par une paroi transversale annulaire (92) du corps de cylindre (17) contre laquelle prend appui axialement un élément intermédiaire (91), reçu dans la partie arrière (26), de positionnement axial d'au moins un joint (94) intérieur d'étanchéité qui coopère avec la paroi latérale (37) du piston (20, 36), et dans lequel ledit élément intermédiaire (91) est maintenu axialement dans la partie arrière (26, 56, 113) par une chemise arrière annulaire cylindrique (50) montée dans la partie arrière (26, 56) et fixée de manière étanche dans cette dernière par collage ou par soudage, notamment par soudage par ultrasons, **caractérisé en ce que** l'élément intermédiaire (91) est un élément tubulaire formant porte-joint(s) (94, 96, 120) dans la paroi périphérique interne (93) duquel est formé deux logements (100, 106) intérieurs de joint qui sont ouverts radialement vers l'intérieur en direction de la paroi latérale (37) du piston (20, 36).

2. Dispositif de commande hydraulique selon la revendication précédente, **caractérisé en ce que** le logement intérieur de joint (100) est ouvert axialement vers l'avant, et **en ce que** le joint (94) qu'il reçoit est retenu axialement vers l'avant par ladite paroi transversale annulaire (92) du corps de cylindre (17) contre laquelle prend appui axialement l'élément intermédiaire porte-joint(s) (91, 114).

3. Dispositif de commande hydraulique selon la revendication 1, **caractérisé en ce que** le logement intérieur de joint (106) est ouvert axialement vers l'arrière, et **en ce que** le joint (96) qu'il reçoit est retenu axialement vers l'arrière par une face transversale annulaire d'extrémité avant (60) de la chemise (50).

4. Dispositif de commande hydraulique selon la revendication 1, **caractérisé en ce que** l'élément intermédiaire porte-joints (91) porte deux joints intérieurs dynamiques d'étanchéité avant (94) et arrière (96) qui sont reçus dans des logements intérieurs avant (100) et arrière (106) ouverts axialement vers l'avant et vers l'arrière respectivement.

5. Dispositif de commande hydraulique selon la revendication 4, **caractérisé en ce que** le joint intérieur d'étanchéité (94) reçu dans ledit logement intérieur (100) ouvert axialement vers l'avant est un joint composite qui comporte une bague interne (97) en matériau à faible coefficient de frottement qui est serrée radialement contre la paroi latérale (37) du piston (20, 36) par un anneau externe (98) en matériau élastomère reçu dans ledit logement intérieur (100).

6. Dispositif de commande hydraulique selon la revendication 4, **caractérisé en ce que** le joint intérieur d'étanchéité (96) reçu dans ledit logement intérieur (106) ouvert axialement vers l'arrière est une coupelle d'étanchéité à lèvre à frottement radial.

7. Dispositif de commande hydraulique selon la revendication 1, **caractérisé en ce qu'**il comporte un joint extérieur (120) d'étanchéité qui intervient entre la périphérie externe (111) de l'élément intermédiaire porte-joint(s) (91) et la périphérie interne (113) de la partie arrière (26) du corps de cylindre (17).

8. Dispositif de commande hydraulique selon la revendication précédente, **caractérisé en ce que** le joint extérieur (120) est reçu dans un logement extérieur de joint formé dans l'élément intermédiaire porte-joint(s) (91) et qui débouche radialement vers l'extérieur en direction de la périphérie interne (113) de la partie arrière (26) du corps de cylindre (17).

9. Dispositif de commande hydraulique selon la revendication précédente, **caractérisé en ce que** ledit logement extérieur de joint est ouvert axialement vers l'avant, et **en ce que** le joint extérieur (120) qu'il reçoit est retenu axialement vers l'avant par ladite paroi transversale annulaire (92) du corps de cylindre (17) contre laquelle prend appui axialement l'élément intermédiaire porte-joint(s) (91).

10. Dispositif commande hydraulique selon la revendication 7, **caractérisé en ce que** ledit élément intermédiaire porte-joint(s) (91) est maintenu serré axialement entre ladite paroi transversale annulaire (92) du corps de cylindre (17) et la face transversale annulaire d'extrémité avant (60) de la chemise (50).

11. Dispositif de commande hydraulique selon la revendication précédente, **caractérisé en ce que** le corps de cylindre (17), la chemise (50) et l'élément porte-joint(s) (91) sont réalisés en matériau plastique.

12. Dispositif de commande hydraulique selon la revendication 1, **caractérisé en ce que** le tronçon d'extrémité libre arrière de la chemise fait saillie axialement au-delà de l'extrémité axiale arrière du corps de cylindre et porte des moyens (72) de butée pour limiter la course axiale vers l'arrière du piston (20) par rapport au corps de cylindre (17).

13. Dispositif de commande hydraulique selon la revendication précédente, **caractérisé en ce que** lesdits moyens de butée sont constitués par un capuchon (74) comportant une jupe axiale cylindrique (76) qui entoure le tronçon d'extrémité axiale arrière (64) de la chemise (50) par rapport auquel elle est retenue axialement, et comportant un fond transversal (82), percé pour le passage de la tige (22) de piston (20), qui constitue une butée transversale annulaire avec laquelle est susceptible de coopérer l'extrémité axiale arrière (54) du piston (20).

14. Dispositif de commande hydraulique selon la revendication précédente, **caractérisé en ce que** la jupe axiale du capuchon de butée (72) est emboîtée élastiquement sur le tronçon d'extrémité axiale arrière (64) de la chemise (50) et **en ce que** le fond transversal de butée du capuchon est décalé axialement vers l'arrière par rapport à la face annulaire transversale d'extrémité axiale arrière de la chemise.

15. Dispositif selon la revendication 14, **caractérisé en ce qu'**il comporte un soufflet (74) de protection et d'étanchéité monté sur le corps de cylindre (17, 50) et sur la tige de piston (22, 86) et **en ce que** le soufflet (74) comporte une jupe cylindrique axiale avant (88), pour sa fixation sur le tronçon d'extrémité axiale arrière (64) de la chemise (50), qui entoure la jupe (76, 78) du capot de protection (72).

16. Dispositif de commande hydraulique selon la revendication 1, **caractérisé en ce que** le piston (20) s'étend à travers l'élément intermédiaire porte-joint(s) (91) avec jeu radial.

17. Dispositif de commande hydraulique selon la revendication précédente, **caractérisé en ce que** la zone de soudage étanche (56, 58) entre la chemise (50) et la partie arrière (26) du corps de cylindre (17) est décalée axialement vers l'arrière par rapport à l'élément intermédiaire porte-joint(s) (91) et **en ce que** la chemise (50) est une chemise de guidage en coulissement du piston (20, 36), et **en ce que**, à cet effet, sa paroi cylindrique interne (52) constitue une portion arrière de l'alésage interne du cylindre dans lequel le piston (20, 36, 40) est monté coulissant de manière étanche.

## Claims

1. Hydraulic control device for the brakes or clutch on a motor vehicle, comprising at least one control cylinder (10), in which the cylinder (10) comprises a substantially tubular cylinder body (17) in an internal bore (42, 52) of which there axially slides a piston (20) which delimits, through a front face (30), a hydraulic chamber (16), in which an orifice (14) for connecting a pipe opens out into the hydraulic chamber (16), in which the cylinder body (17) is stepped and comprises a front part (24) which delimits the hydraulic chamber (16) and in which there is formed at least one front portion (42) of the internal bore in which the piston (20) slides, and a rear part with an enlarged diameter (26), the two parts (24, 26) being delimited by an annular transverse wall (92) of the cylinder body (17) against which there bears axially an intermediate element (91), received in the rear part (26), for axial positioning of at least one internal seal (94) which cooperates with the lateral wall of the piston (20, 36), and in which the said intermediate element (91) is held axially in the rear part (26, 56, 113), by a cylindrical annular rear jacket (50) mounted in the rear part (26, 56) and sealingly fixed in the latter by adhesive bonding or welding, in particular by ultrasonic welding, **characterised in that** the intermediate element (91) is a tubular element forming a seal holder (94, 96, 120) in the internal peripheral wall (93) of which there are formed two internal seal housings (100, 106) which are open radially towards the inside in the direction of the lateral wall (37) of the piston (20, 36).

2. Hydraulic control device according to the preceding claim, **characterised in that** the internal seal housing (100) is open axially towards the front, and **in that** the seal (94) which it receives is retained axially towards the front by the said annular transverse wall (92) of the cylinder body (17) against which the intermediate seal holder element (91, 114) bears axially.

3. Hydraulic control device according to Claim 1, **characterised in that** the internal seal housing (106) is open axially towards the rear, and **in that** the seal (96) which it receives is retained axially towards the rear by an annular front end transverse face (60) of the jacket (50).

4. Hydraulic control device according to Claim 1, **characterised in that** the intermediate seal holder element (91) carries two front (94) and rear (96) internal dynamic seals which are received in front (100) and rear (106) internal housings open axially towards the front and towards the rear respectively.

5. Hydraulic control device according to Claim 4, **characterised in that** the internal seal (94) received in the said internal housing (100) open axially towards the front is a composite seal which comprises an internal ring (97) made from material with a low coefficient of friction which is clamped radially against the lateral wall (37) of the piston (20, 36) by an external ring (98) made from elastomer material received in the said internal housing (100).

6. Hydraulic control device according to Claim 4, **characterised in that** the internal seal (96) received in the said internal housing (106) open axially towards the rear is a sealing cup with a radial friction lip.

7. Hydraulic control device according to Claim 1, **characterised in that** it comprises an external seal (120) which acts between the external periphery (111) of the intermediate seal holder element (91) and the internal periphery (113) of the rear part (26) of the cylinder body (17).

8. Hydraulic control device according to the preceding claim, **characterised in that** the external seal (120) is received in an external seal housing formed in the intermediate seal holder element (91) and which opens out radially towards the outside in the direction of the internal periphery (113) of the rear part (26) of the cylinder body (17).

9. Hydraulic control device according to the preceding claim, **characterised in that** the said external seal housing is open axially towards the front, and **in that** the external seal (120) which it receives is retained axially towards the front by the said annular transverse wall (92) of the cylinder body (17) against which the intermediate seal holder element (91) bears axially.

10. Hydraulic control device according to Claim 7, **characterised in that** the said intermediate seal holder element (91) is kept clamped axially between the said annular transverse wall (92) of the cylinder body (17) and the annular front end transverse face (60) of the jacket (50).

11. Hydraulic control device according to the preceding claim, **characterised in that** the cylinder body (17), the jacket (50) and the seal holder element (91) are produced from plastics material.

12. Hydraulic control device according to Claim 1, **characterised in that** the rear free end portion of the jacket projects axially beyond the rear axial end of the cylinder body and carries stop means (72) for limiting the axial rearward travel of the piston (20) with respect to the cylinder body (17).

13. Hydraulic control device according to the preceding claim, **characterised in that** the said stop means consist of a cap (74) comprising a cylindrical axial skirt (76) which surrounds the rear axial end portion (64) of the jacket (50) with respect to which it is retained axially, and comprising a transverse bottom (82), pierced for the passage of the rod (22) of the piston (20), which constitutes an annular transverse stop with which the rear axial end (54) of the piston (20) is able to cooperate.

14. Hydraulic control device according to the preceding claim, **characterised in that** the axial skirt of the stop cap (72) is fitted elastically on the rear axial end portion (64) of the jacket (50) and **in that** the transverse stop bottom of the cap is offset axially towards the rear with respect to the rear axial end transverse annular face of the jacket.

15. Device according to Claim 14, **characterised in that** it comprises a protective sealing bellows (74) mounted on the cylinder body (17, 50) and on the piston rod (22, 86) and **in that** the bellows (74) comprises a front axial cylindrical skirt (88), for fixing it to the rear axial end portion (64) of the jacket (50), which surrounds the skirt (76, 78) of the protective cap (72).

16. Hydraulic control device according to Claim 1, **characterised in that** the piston (20) extends through the intermediate seal holder element (91) with radial clearance.

17. Hydraulic control device according to the preceding claim, **characterised in that** the sealed welding area (56, 58) between the jacket (50) and the rear part (26) of the cylinder body (17) is offset axially towards the rear with respect to the intermediate seal holder element (91) and **in that** the jacket (50) is a jacket for slidably guiding the piston (20, 36), and **in that**, to this end, its internal cylindrical wall (52) constitutes a rear portion of the internal bore of the cylinder in which the piston (20, 36, 40) is slidably mounted in a sealed manner.

## Patentansprüche

1. Hydraulische Betätigungsvorrichtung einer Bremsanlage oder einer Kupplung für Kraftfahrzeuge, die wenigstens einen Betätigungszylinder (10) enthält, wobei der Zylinder (10) einen in etwa rohrförmigen Zylinderkörper (17) umfasst, in dessen Innenbohrung (42, 52) ein Kolben (20) axial verschiebbar gelagert ist, der durch eine Vorderseite (30) eine Hydraulikkammer (16) begrenzt, wobei eine Anschlussöffnung (14) einer Leitung in der Hydraulikkammer (16) mündet, wobei der Zylinderkörper (17) abgestuft ist und einen vorderen Teil (24), der die Hydraulikkammer (16) begrenzt und in dem wenigstens ein vorderer Abschnitt (42) der Innenbohrung, in welcher der Kolben (20) gleitend verschiebbar gelagert ist, ausgebildet ist, sowie einen hinteren Teil mit erweitertem Durchmesser (26) umfasst, wobei die beiden Teile (24, 26) durch eine ringförmige Querwand (92) des Zylinderkörpers (17) begrenzt sind, an der ein im hinteren Teil (26) aufgenommenes Zwischenelement (91) für die axiale Positionierung wenigstens einer Innendichtung (94) axial zur Anlage kommt, die mit der Seitenwand (37) des Kolbens (20, 36) zusammenwirkt, und wobei das besagte Zwischenelement (91) im hinteren Teil (26, 56, 113) axial durch eine zylindrische ringförmige hintere Buchse (50) gehalten wird, die im hinteren Teil (26, 56) gelagert und in diesem durch Verkleben oder durch Schweißen, insbesondere durch Ultraschallschweißen, dicht befestigt ist, **dadurch gekennzeichnet, dass** das Zwischenelement (91) ein als Träger von Dichtungen (94, 96, 120) dienendes rohrförmiges Element ist, in dessen innerer Umfangswand (93) zwei innere Dichtungsaufnahmen (100, 106) ausgebildet sind, die radial nach innen in Richtung zur Seitenwand (37) des Kolbens (20, 36) offen sind.

2. Hydraulische Betätigungsvorrichtung nach dem vorangehenden Anspruch, **dadurch gekennzeichnet, dass** die innere Dichtungsaufnahme (100) axial nach vorn offen ist und dass die darin aufgenommene Dichtung (94) axial nach vorn durch die besagte ringförmige Querwand (92) des Zylinderkörpers (17) gehalten wird, an der das als Dichtungsträger dienende Zwischenelement (91, 114) axial zur Anlage kommt.

3. Hydraulische Betätigungsvorrichtung nach Anspruch 1, **dadurch gekennzeichnet, dass** die innere Dichtungsaufnahme (106) axial nach hinten offen ist und dass die darin aufgenommene Dichtung (96) axial nach hinten durch eine vordere ringförmige Querabschlussfläche (60) der Buchse (50) gehalten wird.

4. Hydraulische Betätigungsvorrichtung nach Anspruch 1, **dadurch gekennzeichnet, dass** das als Dichtungsträger dienende Zwischenelement (91) zwei innere, vordere (94) und hintere (96) dynamische Dichtungen trägt, die in axial nach vom bzw. nach hinten offenen inneren, vorderen (100) und hinteren (106) Dichtungsaufnahmen aufgenommen sind.

5. Hydraulische Betätigungsvorrichtung nach Anspruch 4, **dadurch gekennzeichnet, dass** die in der besagten axial nach vorn offenen inneren Aufnahme (100) aufgenommene Innendichtung (94) eine Verbunddichtung ist, die einen Innenring (97) aus einem Werkstoff mit niedrigem Reibungskoeffizienten umfasst, der durch einen in der besagten inneren Aufnahme (100) aufgenommenen Außenring (98) aus Elastomermaterial radial an die Seitenwand (37) des Kolbens (20, 36) angedrückt wird.

6. Hydraulische Betätigungsvorrichtung nach Anspruch 4, **dadurch gekennzeichnet, dass** die in der besagten axial nach hinten offenen inneren Aufnahme (106) aufgenommene Innendichtung (96) ein Lippendichtungsteller mit radialer Reibung ist.

7. Hydraulische Betätigungsvorrichtung nach Anspruch 1, **dadurch gekennzeichnet, dass** sie eine Außendichtung (120) umfasst, die zwischen dem äußeren Umfang (111) des als Dichtungsträger dienenden Zwischenelements (91) und dem inneren Umfang (113) des hinteren Teils (26) des Zylinderkörpers (17) zum Einsatz kommt.

8. Hydraulische Betätigungsvorrichtung nach dem vorangehenden Anspruch, **dadurch gekennzeichnet, dass** die Außendichtung (120) in einer äußeren Dichtungsaufnahme aufgenommen ist, die in dem als Dichtungsträger dienenden Zwischenelement (91) ausgebildet ist und die radial nach außen in Richtung des inneren Umfangs (113) des hinteren Teils (23) des Zylinderkörpers (17) mündet.

9. Hydraulische Betätigungsvorrichtung nach dem vorangehenden Anspruch, **dadurch gekennzeichnet, dass** die besagte äußere Dichtungsaufnahme axial nach vom offen ist und dass die darin aufgenommene Außendichtung (120) axial nach vom durch die besagte ringförmige Querwand (92) des Zylinderkörpers (17) gehalten wird, an der das als Dichtungsträger dienende Zwischenelement (91) axial zur Anlage kommt.

10. Hydraulische Betätigungsvorrichtung nach Anspruch 7, **dadurch gekennzeichnet, dass** das als Dichtungsträger dienende Zwischenelement (91) zwischen der besagten ringförmigen Querwand (92) des Zylinderkörpers (17) und der vorderen ringförmigen Querabschlussfläche (60) der Buchse (50) axial eingespannt gehalten wird.

11. Hydraulische Betätigungsvorrichtung nach dem vorangehenden Anspruch, **dadurch gekennzeichnet, dass** der Zylinderkörper (17), die Buchse (50) und das Dichtungsträgerelement (91) aus Kunststoff ausgeführt sind.

12. Hydraulische Betätigungsvorrichtung nach Anspruch 1, **dadurch gekennzeichnet, dass** das hintere freie Endteilstück der Buchse (50) axial über das hintere axiale Ende des Zylinderkörpers hinaus vorsteht und Anschlagmittel (72) trägt, um den axialen Verstellweg des Kolbens (20) nach hinten im Verhältnis zum Zylinderkörper (17) zu begrenzen.

13. Hydraulische Betätigungsvorrichtung nach dem vorangehenden Anspruch, **dadurch gekennzeichnet, dass** die besagten Anschlagmittel eine Kappe (74) aufweisen, die eine zylindrische axiale Einfassung (76) umfasst, die das hintere axiale Endteilstück (64) der Buchse (50) umgibt, im Verhältnis zu dem sie axial gehalten wird, und die einen für den Durchgang der Stange (22) des Kolbens (20) gelochten Querboden (82) umfasst, der einen ringförmigen Queranschlag bildet, mit dem das hintere axiale Ende (54) des Kolbens (20) zusammenwirken kann.

14. Hydraulische Betätigungsvorrichtung nach dem vorangehenden Anspruch, **dadurch gekennzeichnet, dass** die axiale Einfassung der Anschlagkappe (72) am hinteren axialen Endteilstück (64) der Buchse (50) elastisch eingepasst ist und dass der Queranschlagboden der Kappe im Verhältnis zur ringförmigen hinteren axialen Querabschlussfläche der Buchse axial nach hinten versetzt ist.

15. Hydraulische Betätigungsvorrichtung nach Anspruch 14, **dadurch gekennzeichnet, dass** sie einen am Zylinderkörper (17, 50) und an der Kolbenstange (22, 86) angebrachten Schutz- und Dichtungsbalg (74) umfasst und dass der Balg (74) eine vordere axiale zylindrische Einfassung (88) für seine Befestigung am hinteren axialen Endteilstück (64) der Buchse (50) umfasst, das die Einfassung (76, 78) der Schutzkappe (72) umgibt.

16. Hydraulische Betätigungsvorrichtung nach Anspruch 1, **dadurch gekennzeichnet, dass** sich der Kolben (20) mit radialem Spiel durch das als Dichtungsträger dienende Zwischenelement (91) hindurch erstreckt.

17. Hydraulische Betätigungsvorrichtung nach dem vorangehenden Anspruch, **dadurch gekennzeichnet, dass** der dichte Schweißbereich (56, 58) zwischen der Buchse (50) und dem hinteren Teil (26) des Zylinderkörpers (17) im Verhältnis zu dem als Dichtungsträger dienenden Zwischenelement (91) axial nach hinten versetzt ist und dass die Buchse (50) eine Gleitführungsbuchse des Kolbens (20, 36) ist und dass dazu ihre zylindrische Innenwand (52) einen hinteren Abschnitt der Innenbohrung des Zylinders bildet, in welcher der Kolben (20, 36, 40) dicht verschiebbar gelagert ist.
